# EUROPÄISCHE PATENTSCHRIFT

(11) **EP 2 770 238 B1**
(45) Veröffentlichungstag und Bekanntmachung des Hinweises auf die Patenterteilung: **20.04.2016**
(21) Anmeldenummer: 14153960.1
(22) Anmeldetag: 05.02.2014
(51) Int. Cl.: F16L 5/04

(54) **Dämm-Manschette**
Insulation sleeve
Manchette isolante

(30) Priorität: 26.02.2013 DE 102013203178
(43) Veröffentlichungstag der Anmeldung: 27.08.2014
(73) Patentinhaber: Kolektor Missel Insulations GmbH, 70736 Fellbach (DE)
(72) Erfinder: Graba, Daniel, 71394 Kernen (DE); Korfant, Michael, 70374 Stuttgart (DE)
(74) Vertreter: Manitz, Finsterwald & Partner GbR

(56) Entgegenhaltungen:
- EP-A2- 0 099 870
- EP-A2- 1 909 012
- DE-A1- 2 919 455
- DE-A1- 3 817 630
- DE-A1- 19 852 120
- DE-U1- 8 802 933
- GB-A- 2 216 220
- US-A- 4 207 918
- US-A1- 2012 012 347

## Beschreibung

Die vorliegende Erfindung betrifft eine Dämm-Manschette nach dem Oberbegriff des Anspruchs 1 (vgl. DE 198 52 120 A1).

Bei einer aus der EP 1 909 012 A2 bekannten Dämm-Manschette ist für einen verbesserten Brandschutz ein sich bei Hitzeeinwirkung aufblähendes Blähmaterial vorgesehen, um im Brandfall Rohrdurchführungen im Mauerwerk gegen Feuer und Rauchübertragung abdichtend zu verschließen. Die im Brandfall auftretenden Blähkräfte werden bei dieser vorbekannten Dämm-Manschette von dem umgebenden Mauerwerk aufgenommen. Eine solche Dämm-Manschette eignet sich deshalb nicht für eine Branddämmung von Rohrverbindungen, die frei im Raum angeordnet sind und bei denen beispielsweise Gussrohre mit Kunststoffrohren verbunden werden. Bei derartigen Rohrverbindungen muss die Dämm-Manschette das Dämmmaterial derart umfassen, dass dieses im Brandfall die Rohröffnung verschließt, d .h. sich nach innen, jedoch nicht nach außen ausdehnt.

Andere aus dem Stand der Technik bekannte Dämm-Manschetten zur Abschottung von Mischinstallationen verwenden aufwendige Metallgehäuse, die über separat zu sichernde Laschen befestigt werden.

Aus der US 2012/012347 A1 ist eine Brandschutzmanschette mit einem Blechmantel bekannt, der in eine Wand eingesetzt wird.

Es ist die Aufgabe der vorliegenden Erfindung, eine Dämm-Manschette nach dem Oberbegriff des Anspruchs 1 zu schaffen, die für einen Brandschutz von frei liegenden Rohrverbindungen geeignet ist, und die kostengünstig und einfach herstellbar und montierbar ist.

Die Lösung dieser Aufgabe erfolgt durch die Merkmale des Anspruchs 1. Das Verschlussmittel umfasst zwei zu beiden Seiten des Dämmmaterials angeordnete Haltebänder, die sich in Umfangsrichtung der Dämm-Manschette erstrecken und die jeweils durch mehrere in dem Dämmstreifen vorgesehene Durchtrittsöffnungen hindurchgefädelt sind. Es hat sich nämlich überraschenderweise herausgestellt, dass der Dämmstreifen auch ohne umgebendes Mauerwerk zur Aufnahme der Blähkräfte eingesetzt werden kann, wenn dieser einerseits ausreichend fest mit der Rohrverbindung und andererseits mit einem in Umfangsrichtung wirkenden Verschlussmittel auch dann zusammengehalten wird, wenn sich das Kunststoffrohr im Brandfall verformen sollte.

Im Gegensatz zu aus dem Stand der Technik bekannten Lösungen lässt sich die erfindungsgemäße Dämm-Manschette außerordentlich kostengünstig herstellen und mit nur wenigen Handgriffen montieren. Da die beiden Haltebänder durch die Durchtrittsöffnungen in dem Dämmstreifen hindurchgefädelt sind, ist die Dämm-Manschette weitgehend vormontiert und es ist gleichzeitig sichergestellt, dass die Haltebänder nach erfolgter Montage an der Rohrverbindung die richtige Position einnehmen und eine ausreichende und ordnungsgemäße Verbindung der Dämm-Manschette mit der Rohrverbindung sicherstellen.

Vorteilhafte Ausführungsformen der Erfindung sind in der Beschreibung, der Zeichnung sowie den Unteransprüchen beschrieben.

Nach einer ersten vorteilhaften Ausführungsform können die Haltebänder aus Metall sein und insbesondere die Form von handelsüblichen Schlauchklemmen aus Metall aufweisen. Haltebänder aus Metall gewährleisten auch im Brandfall ein gutes Zusammenhalten der Dämm-Manschette und stellen gleichzeitig eine kostengünstige Lösung dar. Bei Verwendung von handelsüblichen Schlauchklemmen wird ein weiterer Kostenvorteil erzielt. Zudem lassen sich derartige Schlauchklemmen auf bekannte Weise mit Hilfe eines üblichen Werkzeugs, beispielsweise eines Schraubendrehers oder eines Gabelschlüssels fest an die Rohre der Rohrverbindung anlegen.

Nach einer weiteren vorteilhaften Ausführungsform können jeweils zwei Durchtrittsöffnungen entlang des Umfangs der Dämm-Manschette paarweise benachbart angeordnet sein. Hierdurch kann ein Halteband jeweils durch die zwei benachbarten Durchtrittsöffnungen hindurchgeführt werden, so dass das Halteband die Dämm-Manschette über nahezu den gesamten Umfang an deren Außenseite umgibt.

In diesem Zusammenhang kann es vorteilhaft sein, wenn der Abstand zwischen zwei benachbarten Durchtrittsöffnungspaaren entlang des Umfangs der Dämm-Manschette deutlich größer ist als der Abstand zwischen zwei benachbarten Durchtrittsöffnungen eines Paares. Der Abstand zwischen zwei benachbarten Durchtrittsöffnungspaaren kann beispielsweise mindestens das Dreifache und insbesondere das Fünffache des Abstands zwischen zwei benachbarten Durchtrittsöffnungen betragen. Auf diese Weise ist gewährleistet, dass einerseits ein guter Halt des Dämmstreifens an der Rohrverbindung sichergestellt ist. Andererseits wird das Halteband ausreichend mit dem Dämmstreifen verbunden.

Nach einer weiteren vorteilhaften Ausführungsform kann der Dämmstreifen doppellagige Faltungen aufweisen. Durch eine doppellagige Faltung, die durch einfaches Falten des Dämmstreifens erzeugt werden kann, kann einerseits eine gewünschte Durchmesserverringerung der Dämm-Manschette zu beiden Seiten des Blähmaterials erzielt werden. Andererseits kann die so erzeugte Faltung auf vorteilhafte Weise verwendet werden, um die im Brandfall entstehenden Blähkräfte aufzunehmen, wobei die Gefahr des Einreißens des Dämmstreifens minimiert ist.

Die doppellagigen Faltungen können auf vorteilhafte Weise durch Abnäher gebildet sein, die sich insbesondere quer zur Umfangsrichtung der Dämm-Manschette erstrecken, wobei die Abnäher insbesondere durch eine Nähverbindung gebildet sein können. Alternativ oder zusätzlich ist es auch möglich, Klammerverbindungen, Klebeverbindungen oder Schweißverbindungen vorzusehen.

Nach einer weiteren vorteilhaften Ausführungsform sind die Durchtrittsöffnungen im Bereich der Faltungen vorgesehen, so dass die Verbindung zwischen dem Halteband und dem Dämmstreifen dadurch erzielt wird, dass das Halteband durch die einzelnen Abnäher hindurchgefädelt wird, in denen die Durchtrittsöffnungen vorgesehen sind.

Nach einer weiteren vorteilhaften Ausführungsform sind die Faltungen so gebildet, dass zwei benachbarte Durchtrittsöffnungen im Wesentlichen fluchten, was das Einfädeln des Haltebandes erleichtert.

Das Blähmaterial, das einteilig oder mehrteilig vorgesehen werden kann, kann mit dem Dämmstreifen vernäht sein und/oder an diesen angetackert sein. Eine besonders zuverlässige Bauweise - auch nach einem Transport der Dämm-Manschette zum Montageort - kann dadurch sichergestellt werden, dass das Blähmaterial zusätzlich mit dem Dämmstreifen verklebt wird.

Die erfindungsgemäße Dämm-Manschette weist keinen Blechmantel auf, was insbesondere dann möglich ist, wenn der Dämmstreifen einen reißfesten Überzug aufweist, der die auftretenden Blähkräfte aufnimmt. Ein solcher reißfester Überzug kann die Form einer Gewebefolie mit Gitterstruktur aufweisen, die aus dem Bereich der Dämmmaterialien grundsätzlich bekannt ist. Bei der erfindungsgemäßen Dämm-Manschette dient jedoch ein solcher reißfester Überzug nicht nur zum Schutz des Dämmstreifens sondern auch zur Aufnahme der entstehenden Blähkräfte.

Nach einer weiteren vorteilhaften Ausführungsform weist das Verschlussmittel zusätzlich einen Klettverschluss auf, der insbesondere an zwei gegenüberliegenden Enden des Dämmstreifens befestigt ist, um die Dämm-Manschette nach Anlegen um die Rohrverbindung herum zu schließen. Durch einen solchen zusätzlichen Klettverschluss wird das Schließen bzw. Befestigen der Haltebänder nach Anlegen der Manschette an die Rohrverbindung deutlich erleichtert. Gleichzeitig kann dadurch der Dämmstreifen quer zur Umfangsrichtung vollständig geschlossen werden.

Nach einer weiteren vorteilhaften Ausführungsform besteht der Dämmstreifen aus einem faltbaren Materialverbund und weist insbesondere ein nicht brennbares Vlies aus mineralischen Fasern auf, um die Dämm-Manschette im Brandfall zumindest solange zu schützen, bis das Blähmaterial die Rohröffnung innerhalb der Rohrverbindung verschlossen hat.

Die Länge des insbesondere streifenförmigen Blähmaterials in Umfangsrichtung kann so gewählt werden, dass dieses nach Anlegen der Dämm-Manschette an eine Rohrverbindung mit einem vorbestimmten Durchmesser diese im Wesentlichen vollständig umgibt, ohne dabei jedoch zu überlappen. Auch ist es möglich, das streifenförmige Blähmaterial entlang des Umfangs zu unterbrechen bzw. aus mehreren Teilen zusammenzusetzen.

Nach einer weiteren vorteilhaften Ausführungsform kann das Blähmaterial von einer Schutzhülle umschlossen sein, um es vor Feuchtigkeit und/oder Beschädigungen auf der Baustelle zu schützen.

Als zusätzliches Verschlussmittel für die Dämm-Manschette können übliche Verschlussmittel, wie beispielsweise Klemm- oder Klebverschlüsse, Haken und Ösen oder Druckknöpfe vorgesehen werden. Besonders bewährt haben sich jedoch Klettverschlüsse.

Die Befestigung des Blähmaterials an dem Dämmstreifen kann grundsätzlich beliebig erfolgen. Besonders vorteilhaft ist jedoch ein Annähen oder Antackern des Blähmaterials, da dies kostengünstig und schnell erfolgen kann.

Wenn die Breite des Blähmaterials etwa ein Drittel der Breite des Dämmstreifens beträgt, lässt sich die Verwendung des vergleichsweise teuren Blähmaterials minimieren, wobei sich mit einem solchen Breitenverhältnis in der Praxis dennoch gute Ergebnisse erzielen lassen.

Der Dämmstreifen kann eine Dicke im Bereich von etwa 2-5 mm aufweisen und das Blähmaterial kann eine Dicke im Bereich von etwa 4-18 mm aufweisen.

Schließlich ist auch erwähnenswert, dass erfindungsgemäß auf einen bisher üblichen Blechmantel oder dergleichen verzichtet werden kann, da die Blähkräfte alleine von dem Dämmstreifen aufgenommen werden, der wiederum durch die Haltebänder an den Rohren der Rohrverbindung befestigt ist.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine Seitenansicht einer ersten Ausführungsform einer Dämm-Manschette, die an eine Rohrverbindung angelegt ist;
- Fig. 2: eine in einem Schnitt quer zur Rohrachse verlaufende Teilansicht, die ein durch eine Faltung des Dämmstreifens geführtes Halteband zeigt; und
- Fig. 3: eine Draufsicht auf einen Zuschnitt der Dämm-Manschette von Fig. 1 und Fig. 2.

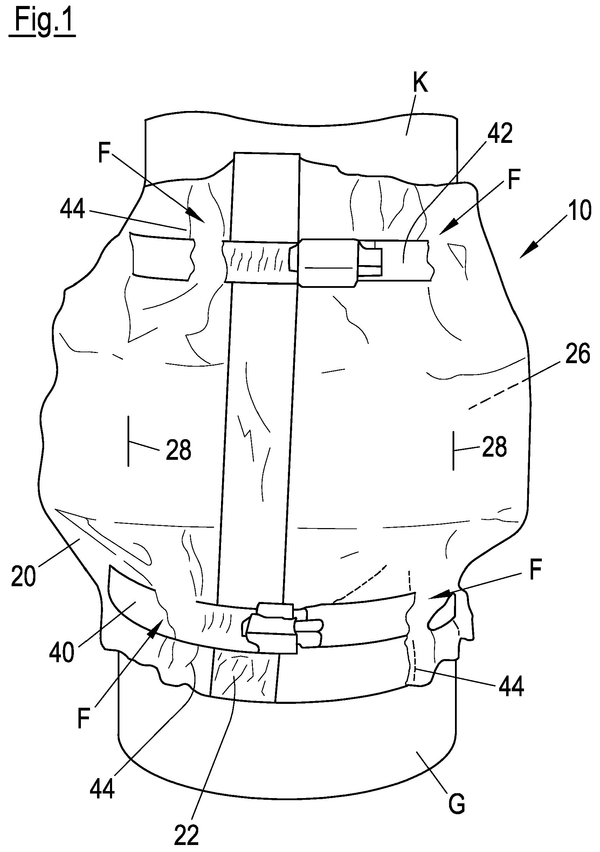

Die in Fig. 1 dargestellte Ausführungsform einer Dämm-Manschette 10 umfasst aus einen Dämmstreifen 20 aus flächigem Material, das feuerhemmend ist. Beispielsweise kann der Dämmstreifen 20 so ausgebildet sein, wie es in der EP 0 896 184 der Anmelderin beschrieben ist, deren Inhalt durch Bezugnahme ausdrücklich zum Gegenstand dieser Offenbarung gemacht wird.

Der Dämmstreifen 20 besteht aus einem faltbaren Materialverbund, der eine äußere Schutzfolie und eine innere Schutzfolie umfasst, zwischen denen ein nicht brennbares Vlies aus mineralischen Fasern angeordnet ist. Auf der Außenseite der äußeren Schutzfolie ist ein reißfester Überzug in Form einer Gewebefolie mit Gitterstruktur (in den Figuren nicht dargestellt) aufkaschiert. Der Dämmstreifen ist entlang seines gesamten Umfangs am Rand vernäht, um den Vlies aus Mineralfasern allseitig einzufassen.

Die Dicke des Dämmstreifens 20 beträgt etwa 3 bis 5 mm, so dass der gesamte Dämmstreifen flexibel und faltbar ist.

Grundsätzlich kommen als Material für den Dämmstreifen 10 sämtliche bekannten Materialien bzw. Materialverbünde in Frage. Der Dämmstreifen sollte jedoch so elastisch bzw. anschmiegsam sein, dass er faltbar ist und um eine Rohrverbindung herum angelegt und gerafft werden kann.

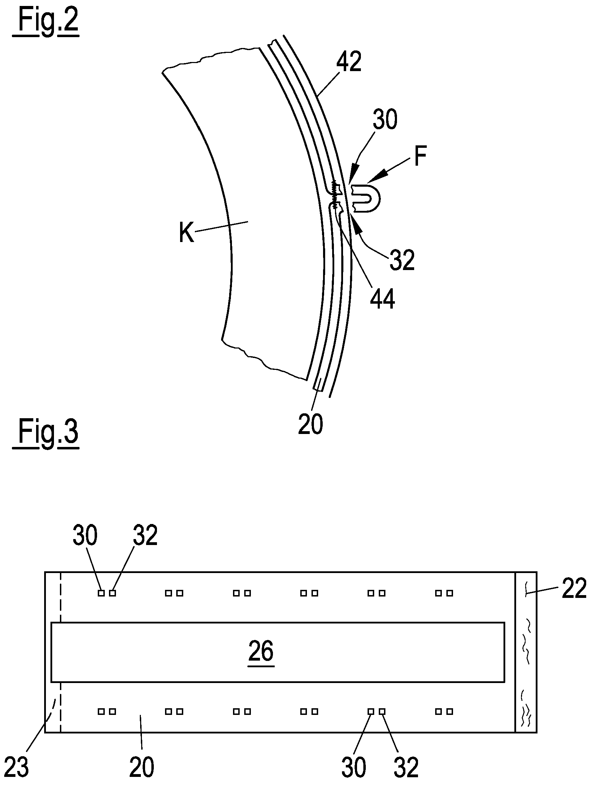

Eine Abwicklung des Dämmstreifens 20 ist in Fig. 3 dargestellt. Man erkennt, dass der Dämmstreifen 20 aus einem rechteckigen Zuschnitt besteht, dessen lange Seite sich im montierten Zustand in Umfangsrichtung der Rohrverbindung und dessen kurze Seite sich parallel zu den Rohren der Rohrverbindung erstreckt. An den beiden kurzen Seiten des Dämmstreifens 20 sind zwei Verschlussteile 22 und 23 eines Klettverschlusses vernäht, mit dem sich die Dämm-Manschette 10 nach einem Anlegen an der Rohrverbindung verschließen lässt.

Ferner zeigt Fig. 3, dass mit der Innenseite des Dämmstreifens 20 ein sich bei Hitzeeinwirkung aufblähendes Blähmaterial in Form eines separaten Streifens 26 verbunden ist, wobei sich der Streifen 26 annähernd über die gesamte Länge des Dämmstreifens 20 und über etwa ein Drittel der Breite des Dämmstreifens 20 erstreckt und mittig befestigt ist.

Bei der dargestellten Ausführungsform ist der Streifen 26 aus Blähmaterial mit dem Dämmstreifen 20 verklebt und zusätzlich von außen mit Tackernadeln 28 (vgl. Fig. 1) angetackert.

Fig. 3 verdeutlicht ferner, dass in dem Dämmstreifen 20 randseitig zwei Reihen mehrerer Paare von Durchtrittsöffnungen 30, 32 vorgesehen sind, d.h. jeweils zwei Durchtrittsöffnungen 30 und 32 sind paarweise benachbart angeordnet. Hierbei beträgt der Abstand zwischen zwei benachbarten Durchtrittsöffnungspaaren etwa das Fünffache des Abstands zwischen zwei benachbarten Durchtrittsöffnungen 30 und 32.

Wie Fig. 1 verdeutlicht, kann die vorstehend beschriebene Dämm-Manschette an eine Rohrverbindung angelegt bzw. um die Rohrverbindung herumgelegt werden. Insbesondere handelt es sich um eine Rohrverbindung, die Rohre aus unterschiedlichen Materialien verbindet, beispielsweise ein Gussrohr G und ein Kunststoffrohr K. Zur sicheren Befestigung der Dämm-Manschette 10 an der Rohrverbindung der Rohre G und K dient neben dem Klettverschluss 22, 23 als weiteres Verschlussmittel jeweils ein zu beiden Seiten des Streifens 26 aus Blähmaterial (in Fig. 1 durch den Dämmstreifen 20 verdeckt) vorgesehenes Halteband 40, 42 in Form einer handelsüblichen Schlauchklemme aus Metall. Die Schlauchklemmen 40 und 42 weisen auf bekannte Weise ein Schraubelement auf, mit dem die beiden Enden der Schlauchklemme gegeneinander verspannt werden können.

In Fig. 1 ist gut zu erkennen, dass die als Haltebänder fungierenden Schlauchklemmen 40 und 42 jeweils durch die in dem Dämmstreifen 20 vorgesehenen Durchtrittsöffnungen 30 und 32 hindurchgefädelt sind. Im montierten Zustand erstrecken sich die Haltebänder in Umfangsrichtung der Dämm-Manschette und mit Hilfe der Haltebänder ist die Dämm-Manschette fest über der Rohrverbindung an den Rohren G und K befestigt.

In Fig. 1 ist ferner zu erkennen, dass die Schlauchklemmen 40 und 42 jeweils im Bereich von doppellagigen Faltungen F durch den Dämmstreifen 20 geführt sind, so dass die Schlauchklemmen 40 und 42 vor und nach der Montage der Dämm-Manschette mit dem Dämmstreifen 20 verbunden sind.

Fig. 2 zeigt eine nicht maßstäbliche Querschnittsansicht durch eine Faltung F. Wie zu erkennen ist, ist der Dämmstreifen 20 im Bereich der Faltung F zu einer Falte umgeschlagen, wobei die Durchtrittsöffnungen 30 und 32 im Bereich der Faltungen F vorgesehen sind und die Faltungen F so gebildet sind, dass jeweils zwei benachbarte Durchtrittsöffnungen 30 und 32 im Wesentlichen fluchten. Hierdurch können die Schlauchklemmen 40 und 42 auf einfache Weise durch die im Bereich der Faltungen F fluchtenden Durchtrittsöffnungen 30 und 32 hindurchgefädelt werden. Fig. 2 verdeutlicht ferner, dass die Faltungen F durch Abnäher gebildet sind, die bei den dargestellten Ausführungsbeispielen durch eine Naht 44 verwirklicht sind.

Zur Montage der vorstehend beschriebenen Dämm-Manschette wird diese bei geöffneten Verschlussmitteln über die Rohrverbindung zwischen den Rohren G und K angelegt und die beiden Verschlussteile 22 und 23 des Klettverschlusses werden wie in Fig. 1 gezeigt verschlossen. Dies geschieht in einer Position, in der sich der Streifen 26 aus Blähmaterial über der Rohrverbindung befindet und diese in Umfangsrichtung vollständig umgibt. Anschließend können die bereits vor der Montage durch die Durchtrittsöffnungen 30 und 32 hindurchgefädelten Schlauchklemmen 40 und 42 verschlossen und gespannt werden, woraufhin sich der Dämmstreifen 20 im Bereich der Schlauchklemmen eng an die Rohre G und K anlegt. Auf diese Weise ist sichergestellt, dass im Brandfall bei einem Aufblähen des Blähmaterials 26 dieses ausreichend fest an seiner Position gehalten wird, so dass auch bei einem Wegschmelzen des Kunststoffrohres K die Öffnung des Gussrohres G durch das Blähmaterial vollständig verschlossen werden kann.

Das sich Hitzeeinwirkung aufblähende Material sollte im Brandfall bei ca. 100 bis 200°C aufschäumen und kann brennbar oder auch nicht brennbar sein.

## Patentansprüche

1. Dämm-Manschette (10) zum Anlegen an eine frei im Raum angeordnete Rohrverbindung eines Gussrohres (G) mit einem Kunststoffrohr (K), wobei die Dämm-Manschette einen Dämmstreifen (20) aus flächigem Material, ein sich bei Hitzeeinwirkung aufblähendes Blähmaterial (26) und ein Verschlussmittel (22, 23, 40, 42) aufweist, **dadurch gekennzeichnet, dass**
das Blähmaterial (26) mit der Innenseite des Dämmstreifens (20) verbunden ist,
das Verschlussmittel zwei zu beiden Seiten des Blähmaterials (26) angeordnete Haltebänder (40, 42) umfasst, die sich in Umfangsrichtung und über den gesamten Umfang der Dämm-Manschette (10) erstrecken, und die jeweils durch mehrere in dem Dämmstreifen (20) vorgesehene Durchtrittsöffnungen (30, 32) hindurchgefädelt sind, und dass
die Dämm-Manschette (10) keinen Blechmantel aufweist und die Blähkräfte alleine von dem Dämmstreifen (20) aufgenommen werden, der durch die Haltebänder (40, 42) an den Rohren (G, K) der Rohrverbindung befestigbar ist.

2. Dämm-Manschette nach Anspruch 1,
**dadurch gekennzeichnet, dass**
die Haltebänder aus Metall sind, insbesondere Schlauchklemmen (40, 42) aus Metall.

3. Dämm-Manschette nach Anspruch 1 oder 2,
**dadurch gekennzeichnet, dass**
jeweils zwei Durchtrittsöffnungen (30, 32) entlang des Umfangs der Dämm-Manschette paarweise benachbart angeordnet sind.

4. Dämm-Manschette nach Anspruch 3,
**dadurch gekennzeichnet, dass**
der Abstand zwischen zwei benachbarten Durchtrittsöffnungspaaren entlang des Umfangs der Dämm-Manschette mindestens das Dreifache des Abstands zwischen zwei benachbarten Durchtrittsöffnungen (30, 32) beträgt.

5. Dämm-Manschette nach zumindest einem der Ansprüche 1 - 4,
**dadurch gekennzeichnet, dass**
der Dämmstreifen (20) doppellagige Faltungen (F) aufweist.

6. Dämm-Manschette nach Anspruch 5,
**dadurch gekennzeichnet, dass**
die Faltungen (F) durch Abnäher gebildet sind, die insbesondere durch eine Nähverbindung (44) gebildet sind.

7. Dämm-Manschette nach zumindest einem der Ansprüche 5 oder 6,
**dadurch gekennzeichnet, dass**
die Durchtrittsöffnungen (30, 32) im Bereich der Faltungen (F) vorgesehen sind.

8. Dämm-Manschette nach Anspruch 3 und 5,
**dadurch gekennzeichnet, dass**
die Faltungen (F) so gebildet sind, dass zwei benachbarte Durchtrittsöffnungen (30, 32) im Wesentlichen fluchten.

9. Dämm-Manschette nach zumindest einem der vorhergehenden Ansprüche,
**dadurch gekennzeichnet, dass**
das Blähmaterial (26) mit dem Dämmstreifen (20) vernäht und zusätzlich mit dem Dämmstreifen (20) verklebt ist.

10. Dämm-Manschette nach zumindest einem der vorhergehenden Ansprüche 1 bis 9,
**dadurch gekennzeichnet, dass**
das Blähmaterial (26) an den Dämmstreifen (20) angetackert und zusätzlich mit dem Dämmstreifen (20) verklebt ist.

11. Dämm-Manschette nach zumindest einem der vorhergehenden Ansprüche,
**dadurch gekennzeichnet, dass**
der Dämmstreifen (20) einen reißfesten Überzug, insbesondere eine Gewebefolie mit Gitterstruktur, aufweist.

12. Dämm-Manschette nach zumindest einem der vorhergehenden Ansprüche,
**dadurch gekennzeichnet, dass**
das Verschlussmittel zusätzlich einen Klettverschluss (22, 23) aufweist, um die Dämm-Manschette (10) zu schließen.

13. Dämm-Manschette nach Anspruch 12,
**dadurch gekennzeichnet, dass**
der Klettverschluss (22, 23) an zwei gegenüberliegenden Enden des Dämmstreifens (20) befestigt ist.

14. Dämm-Manschette nach zumindest einem der vorhergehenden Ansprüche,
**dadurch gekennzeichnet, dass**
der Dämmstreifen (20) aus einem faltbaren Materialverbund besteht.

15. Dämm-Manschette nach zumindest einem der vorhergehenden Ansprüche,
**dadurch gekennzeichnet, dass**
der Dämmstreifen (20) ein nicht brennbares Vlies aus mineralischen Fasern enthält.

## Claims

1. An insulating sleeve (10) for application to a pipe connection of a cast-iron pipe (G) and a plastic pipe (K), said pipe connection being arranged freely in space, wherein the insulating sleeve has an insulating strip (20) of areal material, an intumescent material (26) swelling under the effect of heat and a closure means (22, 23, 40, 42),
**characterized in that**
the intumescent material (26) is connected to the inner side of the insulating strip (20);
the closure means comprises two holding bands (40, 42) which are arranged at both sides of the intumescent material (26), which extend in the peripheral direction and over the total circumference of the insulating sleeve (10) and which are each threaded through a plurality of passage openings (30, 32) provided in the insulating strip (20), and
**in that** the insulating sleeve (10) does not have a sheet metal jacket and the swelling forces are absorbed solely by the insulating strip (20) which is fastenable to the pipes (G, K) of the pipe connection by the holding bands (40, 42).

2. An insulating sleeve in accordance with claim 1,
**characterized in that**
the holding bands are composed of metal, are in particular hose clamps (40, 42) of metal.

3. An insulating sleeve in accordance with claim 1 or claim 2,
**characterized in that**
respectively two passage openings (30, 32) are arranged adjacently in pairs along the circumference of the insulating sleeve.

4. An insulating sleeve in accordance with claim 3,
**characterized in that**
the spacing between two adjacent passage opening pairs along the circumference of the insulating sleeve amounts to at least three times the spacing between two adjacent passage openings (30, 32).

5. An insulating sleeve in accordance with at least one of the claims 1 to 4,
**characterized in that**
the insulating sleeve (20) has double-layered folds (F).

6. An insulating sleeve in accordance with claim 5,
**characterized in that**
the folds (F) are formed by darts which are in particular formed by a seamed connection (44).

7. An insulating sleeve in accordance with at least one of the claims 5 or 6,
**characterized in that**
the passage openings (30, 32) are provided in the region of the folds (F).

8. An insulating sleeve in accordance with claim 3 and claim 5,
**characterized in that**
the folds (F) are formed such that two adjacent passage openings (30, 32) are substantially aligned.

9. An insulating sleeve in accordance with at least one of the preceding claims,
**characterized in that**
the intumescent material (26) is sewn to the insulating strip (20) and is additionally adhesively bonded to the insulating strip (20).

10. An insulating sleeve in accordance with at least one of the preceding claims 1 to 9,
**characterized in that**
the intumescent material (26) is stapled to the insulating strip (20) and is additionally adhesively bonded to the insulating strip (20).

11. An insulating sleeve in accordance with at least one of the preceding claims,
**characterized in that**
the insulating strip (20) has a tear-proof coat, in particular a fabric foil having a mesh structure.

12. An insulating sleeve in accordance with at least one of the preceding claims,
**characterized in that**
the closure means additionally has a hook and loop fastener (22, 23) to close the insulating sleeve (10).

13. An insulating sleeve in accordance with claim 12,
**characterized in that**
the hook and loop fastener (22, 23) is fastened to two oppositely disposed ends of the insulating strip (20).

14. An insulating sleeve in accordance with at least one of the preceding claims,
**characterized in that**
the insulating strip (20) comprises a foldable material compound.

15. An insulating sleeve in accordance with at least one of the preceding claims,
**characterized in that**
the insulating strip (20) includes a non-flammable fleece of mineral fibers.

## Revendications

1. Manchette isolante (10) à appliquer à une liaison tubulaire, agencée librement dans l'espace, entre un tube de fonderie (G) et un tube en matière plastique (K), ladite manchette isolante comprenant une bande isolante (20) en matériau surfacique, un matériau gonflant (26) qui gonfle sous l'action de la chaleur, et un organe de fermeture (22, 23, 40, 42),
**caractérisée en ce que**
le matériau gonflant (26) est relié avec la face intérieure de la bande isolante (20),
l'organe de fermeture inclut deux bandes de maintien (40, 42) agencées sur les deux côtés du matériau gonflant (26), lesquelles s'étendent en direction périphérique et sur la totalité de la circonférence de la manchette isolante (10), et sont respectivement enfilées en traversant plusieurs ouvertures traversantes (30, 32) prévues dans la bande isolante (20), et **en ce que**
la manchette isolante (10) ne comprend aucune enveloppe en tôle et les forces gonflantes sont encaissées uniquement par la bande isolante (20) qui est susceptible d'être fixée par les bandes de maintien (40, 42) sur les tubes (G, K) de la liaison tubulaire.

2. Manchette isolante selon la revendication 1,
**caractérisée en ce que** les bandes de maintien sont en métal, et sont en particulier des colliers de serrage (40, 42) en métal.

3. Manchette isolante selon la revendication 1 ou 2,
**caractérisée en ce que** deux ouvertures traversantes respectives sont agencées par paires et de manière voisine le long de la périphérie de la manchette isolante.

4. Manchette isolante selon la revendication 3,
**caractérisée en ce que** la distance entre deux paires d'ouvertures traversantes voisines le long de la périphérie de la manchette isolante s'élève au moins au triple de la distance entre deux ouvertures traversantes voisines (30, 32).

5. Manchette isolante selon l'une au moins des revendications 1 à 4,
**caractérisée en ce que** la bande isolante (20) comporte des replis à double couche (F).

6. Manchette isolante selon la revendication 5,
**caractérisée en ce que** les replis (F) sont formés par des pinces, qui sont formées en particulier par une liaison cousue (44).

7. Manchette isolante selon l'une au moins des revendications 5 ou 6,
**caractérisée en ce que** les ouvertures traversantes (30, 31) sont prévues dans la zone des replis (F).

8. Manchette isolante selon les revendications 3 et 5,
**caractérisée en ce que** les replis (F) sont formés de telle façon que deux ouvertures traversantes voisines (30, 32) sont sensiblement alignées.

9. Manchette isolante selon l'une au moins des revendications précédentes,
**caractérisée en ce que** le matériau gonflant (26) est cousu avec la bande isolante (20) et est additionnellement collé avec la bande isolante (20).

10. Manchette isolante selon l'une au moins des revendications précédentes 1 à 9,
**caractérisée en ce que** le matériau gonflant (26) est agrafé sur la bande isolante (20) et est additionnellement collé avec la bande isolante (20).

11. Manchette isolante selon l'une au moins des revendications précédentes,
**caractérisée en ce que** la bande isolante (20) comprend un revêtement résistant à la déchirure, en particulier une feuille textile avec une structure grillagée.

12. Manchette isolante selon l'une au moins des revendications précédentes,
**caractérisée en ce que** l'organe de fermeture comprend additionnellement une fermeture agrippante (22, 23) afin de fermer la manchette isolante (10).

13. Manchette isolante selon la revendication 12,
**caractérisée en ce que** la fermeture agrippante (22, 23) est fixée à deux extrémités opposées de la bande isolante (20).

14. Manchette isolante selon l'une au moins des revendications précédentes,
**caractérisée en ce que** la bande isolante (20) est constituée d'un matériau composite susceptible d'être plié.

15. Manchette isolant selon l'une au moins des revendications précédentes,
**caractérisée en ce que** la bande isolante (20) contient un non-tissé incombustible en fibres minérales.
